# EUROPEAN PATENT SPECIFICATION

(11) **EP 1 147 847 B1**
(45) Date of publication and mention of the grant of the patent: **25.08.2004**
(21) Application number: 99925318.0
(22) Date of filing: 15.06.1999
(51) Int. Cl.: B23K 20/12, B23K 31/00, B23K 37/08, B24B 29/00, B24C 1/00, B24C 1/06, B24C 1/08, B61D 17/04, F16S 1/02

(54) **METHOD OF MANUFACTURING STRUCTURAL BODY**
VERFAHREN ZUR HERSTELLUNG EINES BAUTEILES
PROCEDE DE FABRICATION DE CORPS D'ARMATURE

(30) Priority: 16.06.1998 JP 16801798
(43) Date of publication of application: 24.10.2001
(60) Divisional application: 03024170.7
(73) Proprietor: Hitachi, Ltd., Chiyoda-ku, Tokyo 101-8010 (JP)
(72) Inventor: EZUMI, Masakuni, Hitachi, Ltd. Kasado Adm. Div., Kudamatsu-shi, Yamaguchi-ken 742-8601 (JP); SATOU, Akihiro, Hitachi, Ltd. Kasado Adm. Div., Kudamatsu-shi, Yamaguchi-ken 742-8601 (JP); FUKUYORI, Kazushige, Kasado Kikai Co., Ltd., Kudamatsu-shi, Yamaguchi-ken 742-8601 (JP)
(74) Representative: Paget, Hugh Charles Edward
(86) International application number: PCT/JP1999/003164
(87) International publication number: WO 1999/065637

(56) References cited:
- EP-A- 0 579 500
- EP-A- 0 797 043
- EP-A- 0 893 190
- JP-A- 2 108 459
- JP-A- 2 279 457
- JP-A- 8 309 655
- JP-A- 9 309 164
- JP-A- 11 090 655
- JP-U- 6 057 552
- US-A- 5 611 479
- PATENT ABSTRACTS OF JAPAN vol. 010, no. 350 (C-387), 26 November 1986 (1986-11-26) & JP 61 149481 A (HITACHI LTD), 8 July 1986 (1986-07-08)

## Description

The present invention relates to a method of bonding members by friction stir bonding so as to manufacture a structural body, for example a vehicle according to the preamble of claim 1 (see, for example EP-A-0 797 043).

### DESCRIPTION OF THE RELATED ART

As disclosed in Japanese Patent Laid-Open Publication No. 9-309164 (EP 0797043A2), a friction stir bonding method is a technique using a round shaft (called a rotary body) being rotated and inserted in the joint region of members and moving the rotary body along the junction line, thereby heating, mobilizing and plasticising the material, and realizing a solid-phase welding of the members. The rotary body comprises a small-diameter portion to be inserted to the joint region, and a large-diameter portion to be positioned externally. The small-diameter portion and the large-diameter portion are coaxial. The large-diameter side is rotated. The boundary between the small-diameter portion and the large-diameter portion is partially inserted to the joint region. The bonding performed by the friction stir bonding method can be applied to a butt joint and a lap joint.

Moreover, as shown in FIG. 7 of the above-mentioned disclosure, the joint region of the two members are provided with a protrusion extruding toward the rotary body, which is to be bonded by the friction stir bonding.

One example of the technique for manufacturing a railway car is disclosed in Japanese Patent Publication No. 6-45340, wherein the vehicle body of a railway car is manufactured by welding together extruded members made of aluminum alloy. The extruded member is equipped with plural number of ribs provided on one surface of a face plate, which is placed on a frame with the surface not having the ribs facing downward, and welding is performed from the side having the rib. The welding process is carried out so that a weld bead is formed on the back surface thereof.

Since the surface without the ribs is used as the exterior surface of the vehicle body, the weld bead formed on the back surface is cut off to form a smooth surface.

EP-A-579500 describes the manufacture of railway cars using honeycomb composite panels which are welded together by MIG or TLG welding. It is also mentioned that the outer surface is degreased and roughened by sand-blasting, before being painted.

### SUMMARY OF THE INVENTION

Since the weld bead formed on the exterior surface of the vehicle body must be removed in order to form the vehicle body through a welding process, the manufacture process involves increased number of steps. Moreover, when welding the vehicle body, the material is heated to very high temperature, that causes deformation of the vehicle, and thereby deteriorates the appearance. If the vehicle body is completed by a hairline finishing without coating the vehicle body, the weld bead formed to the welding portion deteriorates the appearance of the vehicle body. The weld bead varies in width, and has a wavy appearance. This is why the weld bead deteriorates the exterior appearance of the body. Even if transparent coating is applied to the body after the hairline finishing, the appearance is not improved.

The object of the present invention is to manufacture a structural body, such as a vehicle body, having an attractive appearance using the friction stir bonding method.

The present invention provides the method set out in claim 1.

### BRIEF DESCRIPTION OF THE DRAWINGS

FIG. 1 is a vertical cross-sectional view showing the friction stir bonding joint according to one embodiment of the present invention; and
FIG. 2 is a vertical cross-sectional view showing the joint after performing the friction stir bonding.

### EXPLANATION OF THE REFERENCE NUMBERS

20: rotary body, 30: joint bead, 40: frame, 100: extruded member, 101: face plate, 102: projected region, 105: rib.

### DETAILED DESCRIPTION OF PREFERRED EMBODIMENT

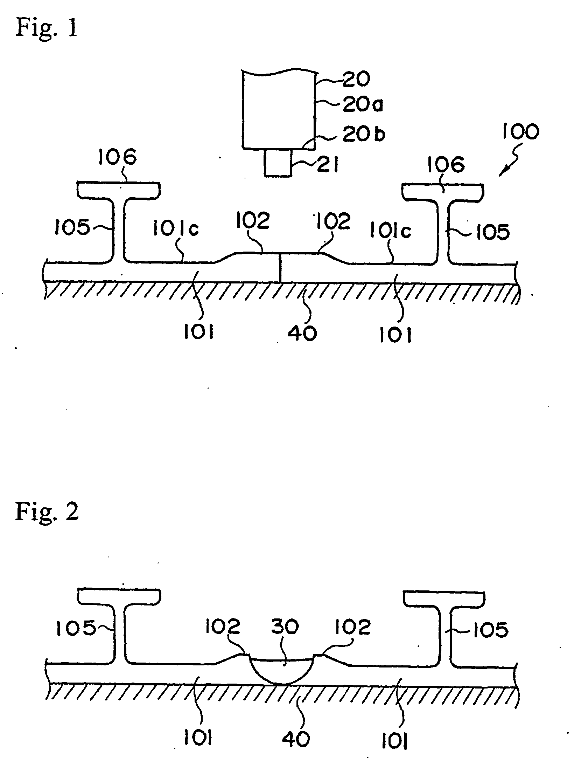

A preferred embodiment of the present invention will now be explained with reference to FIG. 1 and FIG. 2. The present embodiment applies the present invention to form a body of a railway car. The members to be joined together are, for example, extruded members 100 formed of aluminum alloy. The side structure, the roof structure, the gable structure and the floor structure of the vehicle body of the railway car is formed by bonding plural extruded members 100. In the case of the side structure, the roof structure and the floor structure, the length of the member 100 is at maximum equal to the length of the vehicle body. The longitudinal direction of the member 100 is positioned toward the longitudinal direction of the vehicle body. The gable structure defines the end portion of the longitudinal direction of the vehicle body.

The member 100 comprises a face plate 101 and plural ribs 105 formed to one side of the face plate. A plate 106 parallel to the face plate is formed to the tip of each rib 105. After joining plural members together, parts such as pillars, common rafters or mounting seats for equipment are welded to the plate 106. In the case of the side structure, the roof structure and the gable structure of the vehicle body, the surface equipped with the ribs 105 is positioned to face the interior, and the other side faces the exterior of the vehicle.

Each end of the member 100 abutting against another member 100 is equipped with a projected region 102 protruding to the side of the ribs 105. The projected region 102 has a certain amount of width and thickness. The projected region 102 may also be called the thick region. The end portion thereof is a perpendicular surface orthogonal to the face plate 101.

When performing friction stir bonding, plural members 100, 100 are mounted on the frame 40 with the side equipped with ribs 105 facing upward. The perpendicular surfaces at the end portions of each member 100 are placed to contact one another. In such state, the members 100, 100 are bounded to the frame 40. In this state, the frame 40 is placed under the perpendicular surfaces. Upon bonding, the members 100, 100 are pressed onto the frame 40 from above by a device or a vise and the like and bounded thereto. Moreover, the members are bounded on the frame 40 so that the gap formed between the butted end portions of the members 100, 100 is minimized. The number of members 100 mounted on the frame 40 is two or more.

The friction stir bonding is performed in such state. Upon bonding, rollers are utilized that move along with the movement of the rotary body 20 for friction stir bonding. The rollers are positioned in front of and behind the rotary body 20 in the direction of movement of the body 20. The roller presses either the left and right sides of the projected regions 102, 102 or the upper surface of the projected regions.

The rotary body 20 comprises a small-diameter portion 21 formed on the tip of a round rod having a larger diameter. The boundary 20b between the large-diameter portion 20a and the small-diameter portion 21 of the rotary body 20 is formed to have an arc shape concaved toward the large-diameter portion 20a. The small-diameter portion is a screw. The bonding is performed by rotating the rotary body 20, inserting the same between the members 100, 100, and moving the rotary body 20 along the joint line. The axial center of the rotary body 20 is positioned so that the large-diameter portion 20a is tilted rearward against the direction of movement of the rotary body 20. Therefore, the rear end of the boundary 20b is inserted to the members 100, 100 but the front end of the boundary is positioned outward (upper direction in FIG. 1) than the outer (upper) surface of the apex of the protruded regions 102, 102. The rear end of the boundary 20b is positioned between the protruded regions 102, 102 and the outer surface 101c (the surface having the ribs 105, upper surface in FIG. 1) of the face plate 101 of the non-protruded regions. The terms "rear end" and "front end" are based on the direction of movement of the rotary body 20. The tip of the small-diameter portion 21 does not penetrate the members 100, 100. The tip of the small-diameter portion 21 is positioned near the frame 40.

The sum width obtained by adding the width of the apex of two protruded regions 102, 102 is greater than the diameter of the large-diameter portion 20a of the rotary body 20. The widths of the two protruded regions are the same. The rotary center of axis of the rotary body 20 is positioned to the center of width of the two protruded regions.

Though the ends of the members 100, 100 are abutted against each other, since the members 100 are long, there are areas where the ends do not contact one another. The gap is filled by the metal flowing from the protruded regions 102, 102. The outer surface (the upper surface in FIG. 2) of the joint bead 30 formed to the protruded regions 102, 102 is concaved than the surrounding protruded regions 102, 102. The outer surface of the joint bead 30 is somewhat arc-shaped, with a concaved center.

After the bonding, the joint structure body is further bonded through friction stir bonding or normal welding so as to form a vehicle body. After forming the vehicle body, hairline finishing is performed to necessary areas of the outer (exterior) surface of the vehicle body, such as the outer side structure or the gable structure, in order to finish the body. Especially, the side structure is required to have an attractive surface.

In the friction stir bonding, the tip of the small-diameter portion 21 will not contact the frame 40, but the influence provided by the small-diameter portion extends downward beyond the tip of the portion 21. The gap formed between the two members 100, 100 is filled with metal. The gap should be as small as possible. Therefore, the two members 100, 100 are substantially joined in the direction of thickness of the members. Since the exterior surface of the members 100 (opposite surface from the protruded region 102, opposite surface from the ribs 105, lower surface in FIG. 1) is somewhat cut off during the hairline finishing process, the non-bonded portion existing between the joined members, if any, will become indistinctive. Moreover, even if a small amount of metal flows out from the gap between the butted surface of the members 100, 100 to the exterior surface side of the face plate 101, it will be removed by the hairline finishing. By controlling the bonding work so that no uneven area is formed on the outer surface of the butted portion, no metal is dispersed and no non-bonded portion is generated, the need for other cutting processes become unnecessary. Therefore, a friction stir bonding performed from the rib-side of the members enables to provide a hairline-finished vehicle body.

In the case of a normal welding process, the weld bead is discolored according to the material of the welding rod, and therefore, even if the protruded weld bead is cut off, the hairline finishing causes the weld bead to stand out, and therefore deteriorates the appearance. Even if the material of the welding rod is the same as that of the welded members, the weld bead tends to stand out. However, since the friction stir bonding does not involve adding any other material, and since the temperature of the bonding is low, less discoloration is observed, the joint portion becoming less apparent, improving the appearance.

Even further, since the width of the joint bead formed by the friction stir bonding is uniform and in a straight line, the appearance is improved compared to the normal weld bead.

Moreover, since the friction stir bonding does not melt the members, the process is carried out in a relatively low temperature, and the deformation of the of the flatness of the face plate in the vicinity of the joint regions is minimized.

Furthermore, since the protruded region 102 is not formed to the external surface, there is no need to cut off the protruded region 102, and the cost for carrying out the process is reduced. A normal welding method requires removal of the weld bead formed to the lower surface of the weld (back bead). However, according to the joint method explained in the present embodiment, there is no need to remove the weld bead, and the cost for carrying out the method is low.

In some cases, after performing the above-mentioned friction stir bonding, a transparent coating is applied to the surface of the body.

The hairline finishing process is performed for example by rotating a circular cylinder member having a cloth-file mounted to the outer peripheral thereof and filing the face plate 101, and thereafter, rotating a circular cylinder member having plural wires equipped thereto for further filing (cutting) of the surface plate. As explained, the hairline finishing may be classified as a buffing process. Therefore, a buffing process may be performed instead of the hairline finishing process. In another example, a blasting process may be performed. In yet another example, a satin finish (scratch-brush finish) may be performed using a glass-bead blast.

As explained, according to the present embodiment, the side structure and the gable structure manufactured using the friction stir bonding method is assembled to form the vehicle body, and the exterior surface of the formed body is then finished by buffing or blasting process, thereby providing a vehicle body with improved appearance at low cost. The present embodiment is especially effective when applied to the easily-visible side structure.

Even if a non-transparent coating is applied to the face plate, the number of manufacturing steps necessary will be reduced greatly since there is no need to cut off the weld bead. The advantages of the present embodiment could easily be understood when compared to the case where the protrusions 102, 102 are positioned outward forming the exterior of the vehicle body.

The thickness of the whole area of the face plate 101 starting from the end (protruded region 102) of the member 100 to the rib 105 closest thereto can be formed thicker than the thickness of the other areas (for example the areas between rib 105 and another rib 105) of the face plate.

When friction stir bonding is performed, the plate thickness of the joint bead area becomes thin, but if the strength of the plate is sufficient, the friction stir bonding can be applied to members having no protruded areas. In this case, of course, the friction stir boning is performed from the non-exterior surface (for example, the surface with the ribs).

The butted portion of the two members 100, 100 may be sloped so that the V-shaped cross section opens toward the ribs, but in this case, the amount of movement of the plasticised metal from the protrusions 102, 102 must be increased. Moreover, the exterior surface side (the lower side in FIG. 1) of the butted region of the face plates 101, 101 may form a small inverse-V shape.

A hairline finishing process is preferred in the above-mentioned embodiment, but a normal coating finish process can be performed instead of the hairline finishing process.

The present invention may be applied to the case where hollow extruded members are joined to form a structural body or a vehicle body. As disclosed in Japanese Patent Laid-Open Publication No. 9-309164 (EP 0797043A2), hollow extruded members are formed by two parallel face plates and plural ribs connecting the two face plates. As shown in FIG. 7 of the prior art reference, the joint portion is equipped with protrusions extruding outward from the outer surface of the members. The protrusions are formed on both outer surfaces of the members. Similar to the embodiment of the present invention, the members shown in FIG. 7 are bonded through friction stir bonding performed from the protruded sides. The outer surface of the joint bead is protruded compared to the non-protruded areas of the members. After the bonding, one protrusion facing the exterior of the vehicle body is cut off. The cutting is performed so that the joint constitutes the same plane as the face plate. Therefore, no surface irregularities exist in the outer surface of the vehicle body. Thereafter, hairline finishing is provided to the outer surface, completing the vehicle body.

According to the prior art, the joint region formed by the friction stir bonding is cut off to form an even surface. Since friction stir bonding causes small discoloration, removing the joint region provides an attractive outer surface.

Moreover, as disclosed in FIG. 9 of the above-mentioned Japanese Patent Laid-Open Publication No. 9-300164 (EP 0797043A2), the friction stir bonding process may be applied to bond hollow extruded members from only one side. In the example, the face plate on one side of a hollow extruded member is formed to extend toward the adjacent hollow extruded member. The extended face plates of adjacent members are bonded together through friction stir bonding, as shown in FIGS. 1 and 2, from the side of the other face plate. Next, the face plates opposite from the bonded face plates are bonded together via a third plate through friction stir bonding. Then, hairline finishing process is carried out to the exterior surface of the protruded face plates (the other side from the friction stir bonded surface). The outer surface of said protruded face plate forms a flat plane, as shown in FIG. 2.

### INDUSTRIAL APPLICABILITY

The present invention enables to provide a structural body formed through friction stir bonding having an improved appearance.

## Claims

1. A method of manufacturing a structural body, comprising the steps of:
(i) butting together respective ends of face plates (101) of two members (140), each face plate (101) having at said end thereof a thicker end portion (102) which projects from a first side of said face plate (101) above an adjacent surface portion (101c) at said first side; and
(ii) joining said two members (100) at a joint line by performing friction stir bonding in the thicker end portions (102) of said butted ends from said first side only of said face plates to join the face plates in their thickness direction, the friction stir bonding being performed by means of a rotating tool (20) having a small-diameter tip portion (21) projecting from the end of a round rod of a large-diameter portion (20a), wherein the rotating tool (20) is inserted at said first side of said face plates and moved along the joint line so that said tip portion (21) does not penetrate the face plates (101);
**characterised in that**:
during step (ii), the centre axis of the rotating tool (20) is inclined to the vertical, rearwardly against the direction of travel of the tool, and a rear part of the large-diameter portion (20a) of the tool enters into the thicker end portions (102) of the face plates (101) but does not go below the level of said adjacent surface portions (101c) at said first side of the face plates (101); and
the method includes the step of:
(iii) buffing or blasting said joined members (100) at the surface of said end portions at a second side thereof opposite from said first side at which the friction stir bonding has been performed, to finish staid surface as an exterior surface of said structural body.

2. A method according to claim 1, wherein step (iii) is a hairline finishing process and said exterior surface finished by the hairline finishing remains visible at the exterior of the completed structural body.

3. A method according to either one of claims 1 or 2, wherein hairline finishing is performed as said buffing or blasting.

4. A method according to any one of claims 1 to 3, wherein each said member (100) has a plurality of ribs (106) projecting at said first side, the method including, in said step (i), mounting said members (100) on a frame with said second side facing downwards, there being no ribs projecting downward at said second side, and in said step (ii) performing said friction stir bonding so that material of said members does not flow below said surface at said second side.

5. A method according to any one of claims 1 to 3, wherein
(i) each said member has a second face plate spaced from the first said face plate thereof which is subjected to the friction stir bonding, said first and second face plates being connected by plural ribs between them and said second face plate lying on said first side of said first plate, said respective first face plates protruding laterally further than said second face plates towards said ends thereof which are joined by the friction stir bonding, and
(ii) the method including joining said second face plates together via a third plate.

6. A method according to any one of the preceding claims, wherein said structural body is a vehicle body and said exterior surface is an exterior surface of the vehicle body.

## Patentansprüche

1. Verfahren zum Herstellen eines Strukturkörpers, umfassend die folgenden Schritte:
(i) Zusammenfügen der jeweiligen Enden der Abdeckungen (101) zweier Elemente (100), wobei jede Abdeckung (101) an ihrem Ende einen dickeren Endabschnitt (102) aufweist, der an einer ersten Seite der Abdeckung (101) über einen angrenzenden Oberflächenabschnitt (101c) auf der ersten Seite herausragt; und
(ii) Verbinden der beiden Elemente (100) an einer Verbindungslinie durch einen Reibrührschweißvorgang an den dikkeren Endabschnitten (102) der zusammengefügten Enden nur von der ersten Seite der Abdeckungen, um die Abdeckungen in ihrer Dickenrichtung zu verbinden, wobei das Reibrührschweißen mittels eines Rotationselements (20) mit einem Spitzenabschnitt (21) mit kleinem Durchmesser, der vom Ende einer runden Stange eines Abschnitts (20a) mit großem Durchmesser hervorragt, ausgeführt wird, wobei das Rotationselement (20) an der ersten Seite der Abdeckungen eingefügt und entlang der Verbindungslinie bewegt wird, so daß der Spitzenabschnitt (21) die Abdeckungen (101) nicht durchdringt;
**gekennzeichnet dadurch,**
**daß** in Schritt (ii) die Mittenachse des Rotationselements (20) rückwärts entgegen der Bewegungsrichtung des Elements gegenüber der Vertikalen geneigt ist und ein rückwärtiger Teil des Elementabschnitts (20a) mit großem Durchmesser in die dickeren Endabschnitte (102) der Abdeckungen (101) eintritt, aber die Höhe der angrenzenden Oberfächenabschnitte (101c) auf der ersten Seite der Abdeckungen (101) nicht unterschreitet; und
**daß** das Verfahren den folgenden Schritt beinhaltet:
(iii) Schwabbeln oder Sandstrahlen der verbundenen Elemente (100) an der Oberfläche der Endabschnitte auf einer zweiten Seite, die der ersten Seite, auf der das Reibrührschweißen ausgeführt wurde, gegenüberliegt, um die Oberfläche als eine äußere Oberfläche des Strukturkörpers fertigzustellen.

2. Verfahren nach Anspruch 1, wobei Schritt (iii) ein Haarlinienoberflächenbearbeitungsprozess ist, und die durch das Haarlinienoberflächenbearbeiten gefertigte äußere Oberfläche am Äußeren des fertiggestellten Strukturkörpers sichtbar bleibt.

3. Verfahren nach einem der Ansprüche 1 oder 2, wobei Haarlinienoberflächenbearbeiten anstelle des Schwabbelns oder des Sandstrahlens durchgeführt wird.

4. Verfahren nach einem der Ansprüche 1 bis 3, wobei jedes Element (100) mehrere auf der ersten Seite hervorragende Rippen (106) aufweist und das Verfahren beinhaltet: in Schritt (i) das Befestigen der Elemente (100) auf einem Gestell mit der zweiten Seite, auf der keine Rippen nach unten hervorragen, nach unten zeigend sowie in Schritt (ii) das Ausführen des Reibrührschweißens in einer Weise, daß Material der Elemente nicht unterhalb der Oberfläche der zweiten Seite fließt.

5. Verfahren nach einem der Ansprüche 1 bis 3, wobei
(i) jedes Element eine von der ersten mit Reibrührschweißen bearbeiteten Abdeckung beabstandete zweite Abdeckung aufweist, wobei die erste und die zweite Abdeckung durch mehrere Rippen zwischen sich verbunden sind und die zweite Abdeckung auf der ersten Seite der ersten Abdeckung liegt, wobei die ersten Abdeckungen seitlich weiter als die zweiten Abdeckungen zu den Enden, die durch das Reibrührschweißen verbunden werden, hervorragen, und
(ii) das Verfahren das Verbinden der zweiten Abdeckungen mit einer dritten Abdeckung beinhaltet.

6. Verfahren nach einem der vorhergehenden Ansprüche, wobei der Strukturkörper ein Fahrzeugkörper und die äußere Oberfläche eine äußere Oberfläche des Fahrzeugkörpers ist.

## Revendications

1. Procédé de fabrication d'un corps structurel, comportant les étapes consistant à :
(i) mettre en butée ensemble des extrémités respectives de plaques faciales (101) de deux éléments (100), chaque plaque faciale (101) ayant, à ladite extrémité de celle-ci, une partie d'extrémité plus épaisse (102) qui fait saillie à partir d'un premier côté de ladite plaque faciale (101) d'une partie de surface adjacente (101c) sur ledit premier côté, et
(ii) réunir lesdits deux éléments (100) au niveau d'une ligne de jonction, en effectuant une fixation par friction-malaxage dans les parties d'extrémité plus épaisses (102) desdites extrémités mises en butée à partir dudit premier côté uniquement desdites plaques faciales, afin de réunir les plaques faciales dans la direction de leur épaisseur, la fixation par friction-malaxage étant effectuée par l'intermédiaire d'un outil rotatif (20) ayant une partie de pointe de petit diamètre (21) faisant saillie à partir de l'extrémité d'une tige ronde d'une partie de grand diamètre (20a), l'outil rotatif (20) étant inséré au niveau dudit premier côté desdites plaques faciales, et étant déplacé le long de ladite ligne de jonction de sorte que ladite partie de pointe (21) ne pénètre pas dans les plaques faciales (101),
**caractérisé en ce que** :
pendant l'étape (ii), l'axe central de l'outil rotatif (20) est incliné par rapport à la verticale, vers l'arrière à l'encontre de la direction de déplacement de l'outil, et une partie arrière de la partie de grand diamètre (20a) de l'outil entre dans les parties d'extrémité plus épaisses (102) des plaques faciales (101), mais ne va pas en dessous du niveau desdites parties de surface adjacente (101c) sur ledit premier côté des plaques faciales (101), et
le procédé comporte l'étape consistant :
(iii) polir ou sabler lesdits éléments réunis (100) à la surface desdites parties d'extrémité sur un second côté de ceux-ci opposé audit premier côté sur lequel la fixation par friction-malaxage a été effectuée, afin de finir ladite surface sous la forme d'une surface extérieure dudit corps structurel.

2. Procédé selon la revendication 1, dans lequel l'étape (iii) est un processus de finition de ligne, et ladite surface extérieure finie par l'intermédiaire de la finition extérieure fine reste visible à l'extérieur du corps structurel terminé.

3. Procédé selon la revendication 1 ou 2, dans lequel la finition extérieure fine est effectuée lors dudit polissage ou dudit sablage.

4. Procédé selon l'une quelconque des revendications 1 à 3, dans lequel chacun desdits éléments (100) a une pluralité de nervures (106) faisant saille dudit premier côté, le procédé comportant, dans ladite étape (i), le montage desdits éléments (100) sur un châssis en ayant ledit second côté dirigé vers le bas, aucune nervure ne faisant saillie vers le bas dudit second côté, et dans l'étape (ii), la mise en oeuvre de ladite fixation par friction-malaxage, de sorte que le matériau desdits éléments ne s'écoule pas en dessous de ladite surface sur ledit second côté.

5. Procédé selon l'une quelconque des revendications 1 à 3, dans lequel
(i) chacun desdits éléments a une deuxième plaque faciale espacée de sa première plaque faciale qui est soumise à la fixation par friction-malaxage, lesdites première et deuxième plaques faciales étant connectées par plusieurs nervures situées entre elles, et ladite deuxième plaque faciale se trouvant sur ledit premier côté de ladite première plaque, lesdites premières plaques faciales respectives faisant saillie latéralement davantage que lesdites deuxièmes plaques faciales vers lesdites extrémités de celles-ci qui sont réunies par la fixation par friction-malaxage, et
(ii) le procédé comportant l'étape consistant à réunir lesdites deuxièmes plaques faciales ensemble via une troisième plaque.

6. Procédé selon l'une quelconque des revendications précédentes, dans lequel ledit corps structurel est une carrosserie de véhicule, et ladite surface extérieure est une surface extérieure de la carrosserie de véhicule.
